# EUROPÄISCHE PATENTANMELDUNG

(11) **EP 1 911 999 A1**
(43) Veröffentlichungstag der Anmeldung: **16.04.2008**
(21) Anmeldenummer: 07115797.8
(22) Anmeldetag: 06.09.2007
(51) Int. Cl.: F16K 1/42, F16K 31/06

(54) **Ventilkörper und zugehöriges Magnetventil**

(30) Priorität: 10.10.2006 DE 102006047917
(71) Anmelder: ROBERT BOSCH GMBH, 70442 Stuttgart (DE)
(72) Erfinder: Acar, Sezgin, 71638 Ludwigsburg (DE); Tischer, Michael, 74232 Abstatt (DE); Kolarsky, Jens, 74321 Bietigheim/Bissingen (DE); Haas, Martin, 71720 Oberstenfeld (DE); Mailaender, Wolfgang, 71282 Hemmingen (DE); Ludewig, Erich, 74321 Bietigheim-Bissingen (DE); Ambrosi, Massimiliano, 71672 Marbach (DE); Pic, Jean-Guillaume, 71691 Freiberg (DE); Karl, Andreas, 71672 Marbach/Neckar (DE); Weitze, Thomas, 71701 Schwieberdingen (DE)

(57) **Zusammenfassung**

Die Erfindung betrifft einen Ventilkörper (16) für ein Magnetventil mit einem Ventilsitz (16.1) mit einem axialen Zentralkanal (16.2), der zur Umlenkung eines Fluidflusses von mindestens einem seitlichen Zuströmkanal (16.3) gespeist ist und ein zugehöriges Magnetventil. Erfindungsgemäß endet der mindestens eine seitliche Zuströmkanal (16.3) unter einem spitzen Winkel im axialen Zentralkanal (16.2).

## Beschreibung

### Stand der Technik

Die Erfindung geht aus von einem Ventilkörper für ein Magnetventil nach der Gattung des unabhängigen Patentanspruchs 1 und von einem zugehörigen Magnetventil.

Ein herkömmliches Magnetventil für eine Bremsanlage in einem Kraftfahrzeug wird für den Auslass vom Radzylinder seitlich mit Bremsflüssigkeit eingeströmt. Ein solches auch als Auslassventil bezeichnetes Magnetventil ist normalerweise geschlossen und wird während eines Eingriffs durch ein Antiblockiersystem (ABS) oder ein elektronisches Stabilitätsprogramm (ESP) mit Druck beaufschlagt. Daher muss das Auslassventil im Falle einer Bestromung einer zugehörigen Magnetbaugruppe unter Wirkung der entstehenden Magnetkraft gegen den Bremsdruck öffnen. Hierbei können sehr große Differenzdrücke vor und hinter einem Ventildichtsitz herrschen, was dazu führen kann, dass sich ein Schließkörper bei einer geringen Stromstärke zum Zwecke einer geringen Druckabbaugeschwindigkeit, d.h. bei einem geringen Hub bzw. einer Zwischenstellung des Schließkörpers, instabil verhält und/oder zum Schwingen bzw. Zuschnappen neigt. Daher werden bekannte Auslassventile für Bremsanlagen in der Regel nur als Schaltventile betrieben. Um das Auslassventil als "kontinuierlich einstellbares" Ventil ausführen zu können, wird der Ventilkörper daher so ausgeführt, dass die Anströmung gegen den Schließkörper erfolgt, so dass die Strömungskräfte stabilisierend auf den Schließkörper wirken. Diese Anströmung gegen den Schließkörper kann durch eine Strömungsumlenkung innerhalb des Ventilkörpers umgesetzt werden.

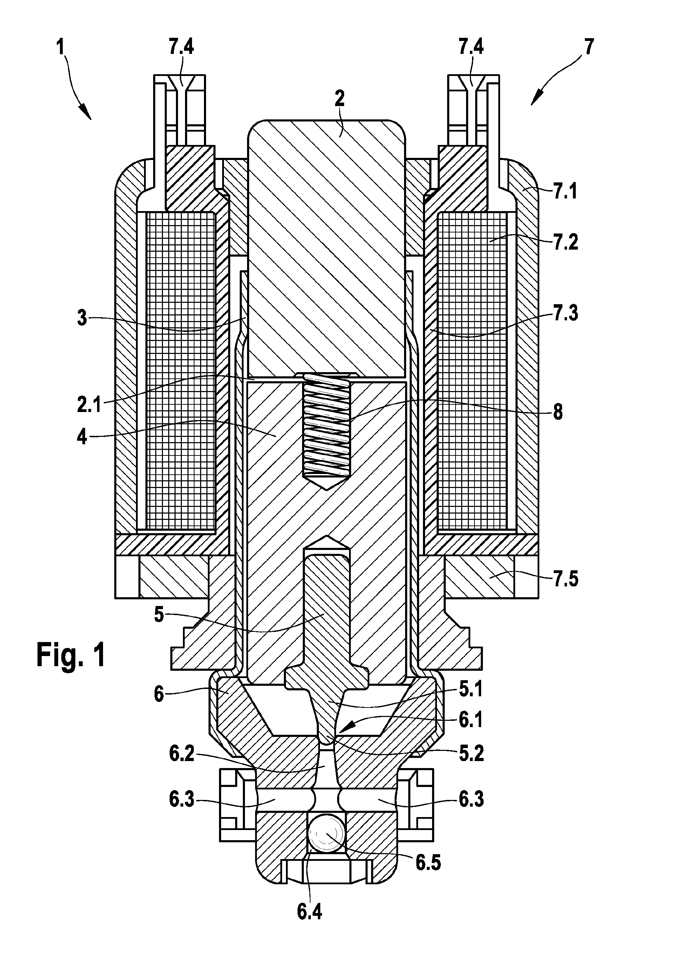

Ein bekanntes Magnetventil, insbesondere für Bremsanlagen von Kraftfahrzeugen, ist in Figur 1 dargestellt. Wie aus Figur 1 ersichtlich ist, umfasst das herkömmliche Magnetventil 1 eine Führungshülse 3, einen darin befestigen Ventilkörper 6, in dem ein hohlkegelförmiger Ventilsitz 6.1 ausgebildet ist, einen in der Führungshülse 3 längsbeweglich geführten Anker 4, der einen Schließkörper 5 mit einem Schaft 5.1 und einem Dichtkugelabschnitt 5.2 aufweist und zum Öffnen und/oder Schließen eines Zentralkanals 6.2 zur Einstellung eines Fluiddurchflusses mit dem Ventilsitz 6.1 zusammenwirkt, und eine Magnetbaugruppe 7, die einen Gehäusemantel 7.1, einen mit einer Spulenwicklung 7.2 bewickelten Wicklungsträger 7.3 und einen mit der Führungshülse 3 verbundenen Polkern 2 umfasst, und eine Magnetkraft erzeugt, die den längsbeweglichen Anker 4 entgegen der Kraft einer Rückstellfeder 8 gegen den Polkern 2 bewegt. Die auf den Wicklungsträger 7.3 gewickelte Spulenwicklung 7.2 bildet eine elektrische Spule, die über elektrische Anschlüsse 7.4 ansteuerbar ist. Der Anker 4 leitet den von der Magnetbaugruppe 7 über eine Abdeckplatte 7.5 eingeleiteten Magnetfluss axial über einen Luftspalt 2.1 in Richtung Polkern 2. Durch Bestromung der Spulenwicklung 7.2 über die elektrischen Anschlüsse 7.4 und den dadurch erzeugten Magnetfluss wird der Anker 4 entgegen der Kraft der Rückstellfeder 8 gegen den Polkern 2 bewegt. Die Strömungsumlenkung erfordert bei dem in Fig. 1 dargestellten Ventilkörper 6, der auf konventionelle Weise spanend hergestellt ist, eine aufwendige Verbohrung des Ventilkörpers 6 mit waagerechten seitlichen Zuströmkanälen 6.3 und einer senkrechten Axialbohrung 6.4, die anschließend über eine Dichtverstemmung beispielsweise mit einer Verstemmkugel 6.5 abschlossen wird. Dies ist aufwendig und birgt ein gewisses Ausfallrisiko.

### Offenbarung der Erfindung

Der erfindungsgemäße Ventilkörper für ein Magnetventil mit den Merkmalen des unabhängigen Patentanspruchs 1 hat demgegenüber den Vorteil, dass zur Umlenkung eines Fluidflusses mindestens ein seitlicher Zuströmkanal unter einem spitzen Winkel in einen axialen Zentralkanal eines Ventilsitzes endet. Durch diese Bauform des Ventilkörpers entfällt in vorteilhafter Weise die Dichtverstemmung des axialen Fluidkanals im Ventilkörper, wodurch ein Prozessschritt eingespart und ein Ausfallrisiko an dieser Stelle aufgehoben wird. Zudem verringert sich der Umlenkungswinkel für das Fluid, was sich positiv auf das Strömungsverhalten bzw. auf den Druckabfall im Ventilkörper auswirkt.

Ein zugehöriges Magnetventil mit einem erfindungsgemäßen Ventilkörper umfasst eine Führungshülse, einen darin befestigen Ventilkörper, in dem ein Ventilsitz ausgebildet ist, einen in der Führungshülse längsbeweglich geführten Anker, der einen Schließkörper mit einem Schaft und einem Dichtkugelabschnitt aufweist und zum Öffnen und/oder Schließen des axialen Zentralkanals zur Einstellung eines Fluiddurchflusses mit dem Ventilsitz zusammenwirkt, und eine Magnetbaugruppe, die einen Gehäusemantel, einen mit einer Spulenwicklung bewickelten Wicklungsträger und einen mit der Führungshülse verbundenen Polkern umfasst und eine Magnetkraft erzeugt, die den längsbeweglichen Anker entgegen der Kraft einer Rückstellfeder gegen den Polkern bewegt.

Durch die in den abhängigen Ansprüchen aufgeführten Maßnahmen und Weiterbildungen sind vorteilhafte Verbesserungen des im unabhängigen Patentanspruch angegebenen Ventilkörpers für ein Magnetventil möglich.

Besonders vorteilhaft ist, dass der Ventilkörper als Formteil ausgeführt ist, das mit einem MIM-Verfahren (Metal Injection Moulded) hergestellt wird. Durch den Herstellungsprozess mit dem MIM-Verfahren können beispielsweise die Querschnitte der Zuströmkanäle und der Abströmkanäle vergrößert werden, da anstelle runder Bohrungen nun spritzgusstechnisch machbare und im vorhandenen Bauraum optimal gestaltete Geometrien umgesetzt werden können. Dadurch weisen der mindestens eine seitliche Zuströmkanal und der mindestens eine Abströmkanal jeweils einen an die Geometrie des Ventilsitzes angepassten optimierten Querschnitt auf, der so groß wie möglich gestaltet ist, um die Druckverluste gering zu halten. Der mindestens eine seitliche Zuströmkanal weist beispielsweise einen rechtwinkligen Querschnitt auf und/oder der mindestens eine Abströmkanal weist einen sichelförmigen Querschnitt auf, um einen möglichst großen Strömungsquerschnitt zu verwirklichen.

In Ausgestaltung des erfindungsgemäßen Ventilkörpers sind zwei seitliche Zuströmkanäle vorhanden, die symmetrisch im senkrechten Zentralkanal enden.

Zusätzlich können die beiden seitlichen Zuströmkanäle beispielsweise jeweils eine Biegung mit einem vorgebbaren Radius aufweisen.

Die beiden seitlichen Zuströmkanäle des Ventilkörpers können während des MIM-Verfahrens beispielsweise durch entsprechende winklig im Spritzwerkzeug eingeführte Schieber erzeugt werden, die mit einem Axialschieber für den axialen Zentralkanal schließen. Die alternativen Zuströmkanäle mit Biegung können durch entsprechende Schiebervorrichtungen umgesetzt werden.

In weiterer Ausgestaltung des erfindungsgemäßen Ventilkörpers kann ein zweiter Axialkanal zur Materialreduzierung vorhanden sein. Dieser zweite Axialkanal dient nur zur Werkstoffverringerung und ist nicht durchgehend ausgeführt.

Eine vorteilhafte, nachfolgend beschriebene Ausführungsform der Erfindung sowie das zu deren besserem Verständnis oben erläuterte, herkömmliche Ausführungsbeispiel sind in den Zeichnungen dargestellt. In den Zeichnungen bezeichnen gleiche Bezugszeichen Elemente bzw. Komponenten, welche gleiche bzw. analoge Funktionen ausführen.

### Kurze Beschreibung der Zeichnungen

Figur 1 zeigt eine schematische Schnittdarstellung eines Magnetventils mit einem herkömmlichen Ventilkörper.

Figur 2 zeigt eine schematische Schnittdarstellung eines erfindungsgemäßen Ventilkörpers für ein Magnetventil.

Figur 3 zeigt eine Draufsicht auf einen Ventilsitz des erfindungsgemäßen Ventilkörpers für ein Magnetventil gemäß Fig. 2.

### Ausführungsformen der Erfindung

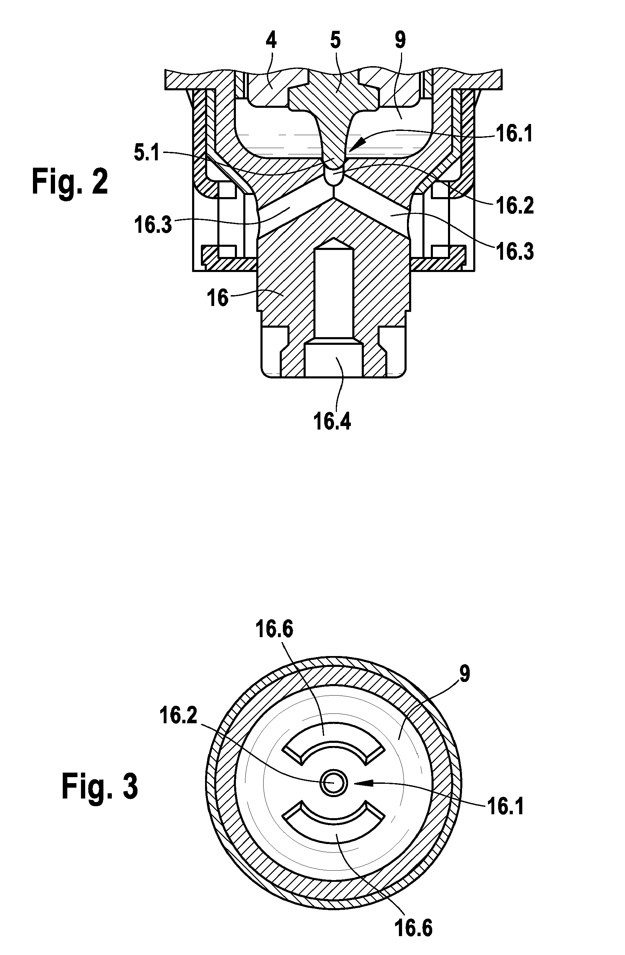

Nachfolgend wird unter Bezugnahme auf Fig. 2 und 3 ein Ausführungsbeispiel eines erfindungsgemäßen Ventilkörpers 16 für ein Magnetventil beschrieben. Wie aus Fig. 2 und 3 ersichtlich ist, umfasst der Ventilkörper 16 für ein Magnetventil einen Ventilsitz 16.1 mit einem axialen Zentralkanal 16.2, der zur Umlenkung eines Fluidflusses von zwei seitlichen Zuströmkanälen 16.3 gespeist wird, die jeweils unter einem spitzen Winkel symmetrisch im axialen Zentralkanal 16.2 enden. Der dargestellte Ventilkörper 16 ist als Formteil ausgeführt und wird mit einem MIM-Verfahren (Metal Injection Moulded) hergestellt. Die beiden seitlichen Zuströmkanäle 16.3 werden während des MIM-Verfahrens durch entsprechende winklig im Spritzwerkzeug eingeführte Schieber erzeugt, die mit einem Axialschieber für den axialen Zentralkanal 16.2 schließen. Zudem weist der Ventilkörper einen zweiten nicht durchgehenden Axialkanal 16.4 zur Materialreduzierung auf.

Wie weiter aus Fig. 2 und 3 ersichtlich ist, sind die beiden seitlichen Zuströmkanäle 16.3 und zwei Abströmkanäle 16.6 an die Geometrie des Ventilsitzes 16.1 angepasst und weisen optimierte Querschnitte auf. So weisen die beiden seitlichen Zuströmkanäle 16.3 jeweils einen rechtwinkligen Querschnitt auf und die Abströmkanäle 16.6 weisen jeweils einen sichelförmigen Querschnitt auf.

Bei einer alternativen nicht dargestellten Ausführungsform des erfindungsgemäßen Ventilkörpers weisen die beiden seitlichen Zuströmkanäle 16.3 jeweils eine Biegung mit einem vorgegebenen Radius auf, die über entsprechende Schiebervorrichtungen im Spritzwerkzeug während des MIM-Verfahrens zur Herstellung des Ventilkörpers 16 umgesetzt werden.

Ein zugehöriges erfindungsgemäßes Magnetventil ist analog zu dem in Bezugnahme auf Fig. 1 beschriebenen Magnetventil 1 ausgeführt, wobei der herkömmliche Ventilkörper 6 durch den erfindungsgemäßen Ventilkörper 16 ersetzt ist. Im Unterschied zum herkömmlichen Ventilkörper 6 ist beim erfindungsgemäßen Ventilkörper 16 in vorteilhafter Weise keine Dichtverstemmung des axialen Fluidkanals im Ventilkörper erforderlich, wodurch ein Prozessschritt eingespart und ein Ausfallrisiko an dieser Stelle aufgehoben wird. Zudem verringert sich der Umlenkungswinkel für das Fluid, was sich positiv auf das Strömungsverhalten bzw. auf den Druckabfall im erfindungsgemäßen Ventilkörper 16 auswirkt.

Das erfindungsgemäße Magnetventil kann beispielsweise als einstellbares Auslassventil für ein regeneratives Bremssystem in einem Hybridfahrzeug einsetzt werden.

## Patentansprüche

1. Ventilkörper für ein Magnetventil (1) mit einem Ventilsitz (16.1) mit einem axialen Zentralkanal (16.2), der zur Umlenkung eines Fluidflusses von mindestens einem seitlichen Zuströmkanal (16.3) gespeist ist, **dadurch gekennzeichnet, dass** der mindestens eine seitliche Zuströmkanal (16.3) unter einem spitzen Winkel im axialen Zentralkanal (16.2) endet.

2. Ventilkörper nach Anspruch 1, **dadurch gekennzeichnet, dass** der Ventilkörper (16) als Formteil ausgeführt ist, das mit einem MIM-Verfahren hergestellt ist.

3. Ventilkörper nach Anspruch 1 oder 2, **dadurch gekennzeichnet, dass** der mindestens eine seitliche Zuströmkanal (16.3) und mindestens ein Abströmkanal (16.6) einen an die Geometrie des Ventilsitzes (16.1) angepassten optimierten Querschnitt aufweisen.

4. Ventilkörper nach Anspruch 3, **dadurch gekennzeichnet, dass** der mindestens eine seitliche Zuströmkanal (16.3) einen rechtwinkligen Querschnitt aufweist und/oder der mindestens eine Abströmkanal (16.6) einen sichelförmigen Querschnitt aufweist.

5. Ventilkörper nach einem der Ansprüche 1 bis 5, **dadurch gekennzeichnet, dass** zwei seitliche Zuströmkanäle (16.3) symmetrisch im senkrechten Zentralkanal (16.2) enden.

6. Ventilkörper nach Anspruch 5, **dadurch gekennzeichnet, dass** die beiden seitlichen Zuströmkanäle (16.3) eine Biegung mit einem vorgebbaren Radius aufweisen..

7. Ventilkörper nach Anspruch 5 oder 6, **dadurch gekennzeichnet, dass** die beiden seitlichen Zuströmkanäle (16.3) während des MIM-Verfahrens durch entsprechende winklig im Spritzwerkzeug eingeführte Schieber erzeugbar sind, die mit einem Axialschieber für den axialen Zentralkanal (16.2) schließen.

8. Ventilkörper nach einem der Ansprüche 1 bis 7, **gekennzeichnet durch** einen zweiten Axialkanal (16.4) zur Materialreduzierung.

9. Magnetventil mit einer Führungshülse (3), einem darin befestigen Ventilkörper (16), in dem ein Ventilsitz (16.1) ausgebildet ist, einem in der Führungshülse (3) längsbeweglich geführten Anker (4), der einen Schließkörper (5) mit einem Schaft (5.1) und einem Dichtkugelabschnitt (5.2) aufweist und zum Öffnen und/oder Schließen eines axialen Zentralkanals (16.2) zur Einstellung eines Fluiddurchflusses mit dem Ventilsitz (16.1) zusammenwirkt, und einer Magnetbaugruppe (7), die einen Gehäusemantel (7.1) einen mit einer Spulenwicklung (7.2) bewickelten Wicklungsträger (7.3) und einen mit der Führungshülse (3) verbundenen Polkern (2) umfasst und eine Magnetkraft erzeugt, die den längsbeweglichen Anker (4) entgegen der Kraft einer Rückstellfeder (8) gegen den Polkern (2) bewegt, **dadurch gekennzeichnet, dass** der Ventilkörper (16) gemäß einem der Ansprüche 1 bis 8 ausgeführt ist.
